Europäisches Patentamt

European Patent Office

Office européen des brevets

(19)

(11) Veröffentlichungsnummer: **0 334 174 B1**

(12)

# EUROPÄISCHE PATENTSCHRIFT

(45) Veröffentlichungstag der Patentschrift :
04.12.91 Patentblatt 91/49

(51) Int. Cl.⁵ : **A01C 11/02, A01C 5/04**

(21) Anmeldenummer : 89104521.3

(22) Anmeldetag : 14.03.89

(54) An ein landwirtschaftliches Zugfahrzeug o.dgl. anbaubare Pflanzvorrichtung.

(30) Priorität : 24.03.88 DE 3809897

(43) Veröffentlichungstag der Anmeldung :
27.09.89 Patentblatt 89/39

(45) Bekanntmachung des Hinweises auf die
Patenterteilung :
04.12.91 Patentblatt 91/49

(84) Benannte Vertragsstaaten :
AT DE ES FR IT

(56) Entgegenhaltungen :
FR-A- 2 354 693
FR-A- 2 356 351
US-A- 3 349 730
US-A- 4 112 857
US-A- 4 644 880

(73) Patentinhaber : **CLEMENS UND CO.
KOMMANDITGESELLSCHAFT
Rudolf-Diesel-Strasse 8
W-5560 Wittlich (DE)**

(72) Erfinder : **Clemens Bernard
Königsberger Strasse 8
W-5560 Wittlich (DE)**

(74) Vertreter : **Schönherr, Wolfgang et al
Patentanwälte Wolfgang Schönherr Dipl.-Ing.
Karl-Heinz Serwe Hawstrasse 28
W-5500 Trier (DE)**

EP 0 334 174 B1

## Beschreibung

Die Erfindung betrifft eine an ein landwirtschaftliches Zugfahrzeug o.dgl. anbaubare Pflanzvorrichtung, insbesondere zum Pflanzen von Reben, mit einem trichterartig hohlen, mit einer Öffnungseinrichtung versehenen Pflanzspaten, der in einem Pflanzschlitten in vertikaler Richtung auf- und abschiebbar angeordnet ist, wobei der Pflanzschlitten in der Pflanzvorrichtung horizontal in Arbeitsrichtung durch einen hydraulisch steuerbaren Horizontal-Druckzylinder hin- und herschiebbar gelagert ist.

Eine derartige Pflanzvorrichtung ist aus der deutschen Offenlegungsschrift 3004900 bekannt. Bei dieser bekannten Pflanzvorrichtung wird der Pflanzspaten nach unten in das Erdreich eingeschoben. Durch das Einschieben des Pflanzspatens in das Erdreich wird der Pflanzspaten festgehalten und da sich das Zugfahrzeug weiterbewegt, gleitet der Pflanzschlitten auf der zugeordneten Führung nach hinten. Nach dem Herausziehen des Pflanzspatens aus dem Erdreich wird der Pflanzschlitten von dem vorgesehenen Druckzylinder wieder in seine vordere Ruhestellung geschoben.

Als nachteilig hat sich herausgestellt, daß insbesondere in lockeren Böden der Pflanzspaten beim Einfahren und beim Ausfahren in das Erdreich eine Relativbewegung zum Erdreich in Fahrtrichtung gesehen vollführt, so daß vor und nach der Pflanzstelle eine Furche gebildet wird. Darüber hinaus zeigt die Erfahrung, daß die notwendige leichte Verschiebbarkeit des Pflanzschlittens in horizontaler Richtung aufgrund des rauhen Einsatzbetriebes nicht gewährleistet werden kann. Die Furchenbildung beeinträchtigt das sichere Anwachsen der gesetzten Pflanzen.

Aus der deutschen Offenlegungsschrift 2531478 ist eine Pflanzmaschine mit einem Pflanzrohr bekannt, das um eine horizontale Achse schwenkbar am Ende eines Auslegers befestigt ist, der ebenfalls um eine horizontale Achse schwenkbar am hinteren Ende eines Fahrzeuges anbaubar ist. Das Pflanzrohr ist von einer vorgespannten Feder schräg geneigt nach vorne gehalten. Zum Pflanzen wird bei dieser bekannten Pflanzmaschine der Ausleger nach unten geschwenkt, so daß das Pflanzrohr in das Erdreich eindringt und aufgrund der Weiterbewegung der Pflanzmaschine entgegen der Kraft der vorgespannten Feder nach hinten geschwenkt wird. Auch bei dieser bekannten Vorrichtung zeigt sich, daß beim Ein- und beim Ausfahren des Pflanzrohres in das Erdreich eine Relativbewegung zum Erdreich in Fahrtrichtung gesehen auftritt, so daß vor und nach der Pflanzstelle eine Furche gebildet wird.

Die Aufgabe der Erfindung besteht daher darin, eine Vorrichtung der eingangs genannten Art derart weiterzubilden, daß schnell und sicher Pflanzen auch tief im Boden gesetzt werden können.

Diese Aufgabe wird dadurch gelöst, daß der Pflanzspaten im Pflanzschlitten um eine quer zur Arbeitsrichtung und horizontal verlaufende Schwenkachse schwenkbar angeordnet ist, daß der Pflanzspaten mit einer vorgespannten Feder derart verbunden ist, daß der Pflanzspaten mit seiner Spitze in Arbeitsrichtung in nach vorne geschwenkter Ruhestellung gehalten ist, und daß im Pflanzschlitten ein dem Horizontal-Druckzylinder zugeordnetes Steuerventil angeordnet ist, dessen Ventilstößel derartig gelenkig mit dem Pflanzspaten verbunden ist, daß in Ruhestellung des pflanzspatens der Pflanzschlitten in Arbeitsrichtung nach vorne in seine Ruhestellung geschoben wird und dort gehalten gehalten ist und bei Auslenkung des Pflanzspatens entgegen der Wirkung der vorgespannten Feder der Pflanzschlitten nach hinten geschoben wird.

Vorteilhaft ist das Steuerventil des Horizontal-Druckzylinders derart ausgebildet, daß die Schubgeschwindigkeit des Pflanzschlittens proportional der Auslenkung des Pflanzspatens ist.

Vorzugsweise ist ein Entlastungsventil vorgesehen, das in Ruhestellung des Pflanzschlittens vom Pflanzschlitten betätigt ist.

Bei einer bevorzugten Ausführungsform ist der Pflanzschlitten auf zwei parallel und im Abstand zueinander angeordneten Stäben hin- und herschiebbar angeordnet. Vorzugsweise ist der Pflanzspaten auf einer Trägerplatte angeordnet, die auf zwei im Abstand und parallel zueinander im Pflanzschlitten angeordneten Säulen auf- und abschiebbar gelagert ist.

Vorzugsweise hat der Pflanzspaten zwei Spatenabschnitte, die jeweils an ihren oberen Enden um eine horizontale Drehachse schwenkbar gelagert sind, wobei die beiden Drehachsen im Abstand und parallel zueinander verlaufen. Vorzugsweise sind die Drehachsen der Spatenabschnitte in Arbeitsrichtung verlaufend angeordnet.

Die Pflanzspatenabschnitte sind vorteilhaft mit einer gemeinsamen, an der Trägerplatte angeordneten Öffnungseinrichtung verbunden. Vorzugsweise weist die Öffnungseinrichtung einen hydraulisch steuerbaren Druckzylinder auf, dessen Kolbenstange über Gelenkhebel mit den Pflanzspatenabschnitten des Pflanzspatens gelenkig verbunden ist. Der Druckzylinder der Öffnungseinrichtung ist vorteilhaft derart mit einem Magnetsteuerventil verbunden, daß der Pflanzspaten in seiner tiefsten Stellung geöffnet ist und bis zur Rückkehr in die obere Ruhestellung geöffnet bleibt.

Vorteilhaft ist an dem Pflanzschlitten ein hydraulisch steuerbarer Vertikal-Druckzylinder angeordnet, der an seinem einen Ende mit dem Pflanzschlitten und über seine Kolbenstange mit der Trägerplatte verbunden

2

ist. Der Vertikal-Druckzylinder ist vorzugsweise derartig mit einem Magnetsteuerventil verbunden, daß nach einem Auslöseimpuls der Pflanzspaten selbsttätig nach unten und wieder in seine obere Ruhelage fährt.

Vorzugsweise ist eine Längenmeßeinrichtung zur Erzeugung der Auslöseimpulse vorgesehen. Vorteilhaft ist an der Pflanzvorrichtung eine Tragstrebe zum Anbau von Bodenbearbeitungswerkzeugen vorgesehen.

Bei einer vorteilhaften Ausführungsform ist dem Pflanzspaten eine Bewässerungseinrichtung, Düngemittelabgabeeinrichtung o.dgl. zugeordnet.

Die Erfindung ist in den Zeichnungen beispielhaft dargestellt. Es zeigen :

| Fig. 1 | die Pflanzvorrichtung in Seitenansicht in Ruhestellung, |
|---|---|
| Fig. 2 | die Pflanzvorrichtung in Frontansicht in Ruhestellung und die |
| Fig. 3a bis 8b | den Pflanzschlitten in unterschiedlichen Betriebsstellungen in Seitenansicht und den Pflanzspaten in den dazugehörigen Stellungen in Frontansicht. |

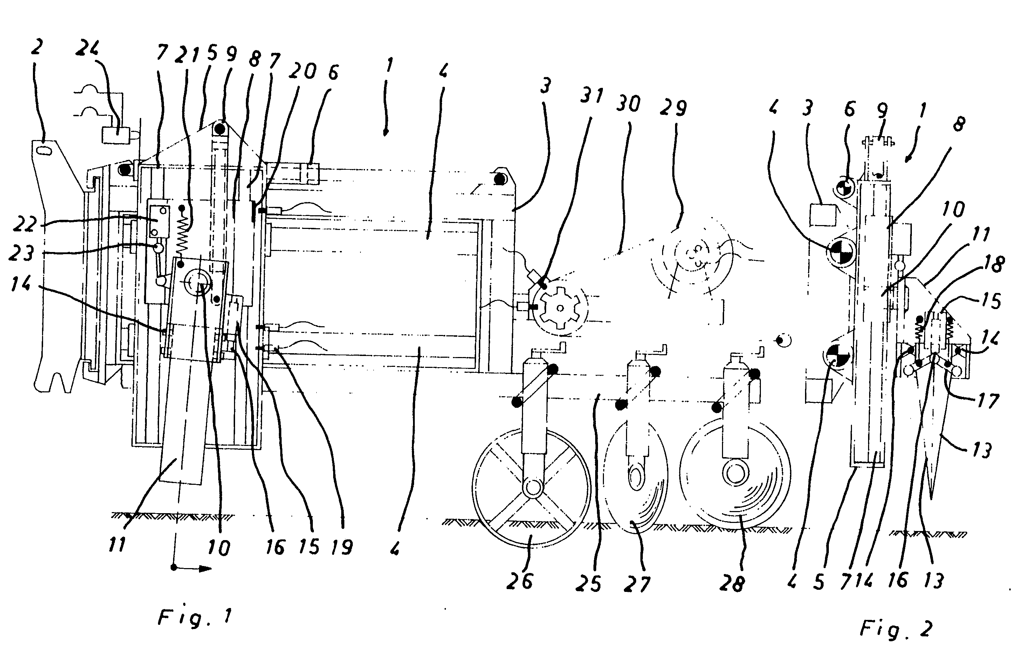

Nach den Fig. 1 und 2 ist an einem nicht dargestellten landwirtschaftlichen Zugfahrzeug eine Pflanzvorrichtung (1) mit Hilfe einer Dreipunktanhängung (2) anhängbar. Die Pflanzvorrichtung (1) weist einen Tragrahmen (3) auf, in dem im Abstand und parallel zueinander zwei Stäbe (4) horizontal in Arbeitsrichtung, d.h. in Fahrtrichtung des Zugfahrzeuges verlaufend angeordnet sind. Auf den Stäben (4) ist ein Pflanzschlitten (5) mit Hilfe eines hydraulischen Horizontal-Druckzylinders (6) hin- und herschiebbar angeordnet.

Der Pflanzschlitten (5) weist im Abstand und parallel zueinander in vertikaler Richtung verlaufende Säulen (7) auf, auf denen eine Tragerplatte (8) mit Hilfe eines Vertikal-Druckzylinders (9) in vertikaler Richtung auf- und abschiebbar geführt ist. Die Trägerplatte hat eine in horizontaler Richtung und quer zur Fahrtrichtung des Zugfahrzeuges verlaufende Schwenkachse (10), auf der ein Pflanzspaten (11) aus zwei Spatenabschnitten (13) (Fig 2) schwenkbar angeordnet ist.

Wie die Fig. 2 zeigt, sind die beiden Spatenabschnitte (13) an ihrem oberen Ende jeweils um eine in horizontaler Richtung und parallel zur Fahrtrichtung verlaufende Drehachse (14) schwenkbar gelagert, wobei die beiden Drehachsen im Abstand zueinander verlaufen. Im Pflanzspaten (11) ist ferner eine Öffnungseinrichtung mit einem Druckzylinder (15) angeordnet, dessen Kolbenstange (16) über Gelenkhebel (17) mit den Pflanzspatenabschnitten (13) gelenkig verbunden sind. Die vorgespannten Federn (18) halten die Pflanzspatenabschnitte (13) in Ruhestellung in geschlossener Stellung.

Ein am Pflanzschlitten angeordnetes Magnetsteuerventil (19) wirkt mit einem an der Trägerplatte (8) angeordneten Anschlag (20) derart zusammen, daß in der tiefsten Stellung der Trägerplatte (8) der Druckzylinder (15) betätigt ist, so daß sich die Spatenabschnitte (13) des Pflanzspatens (11) öffnen.

Wie die Fig. 1 weiter zeigt, ist der Pflanzspaten (11) von einer vorgespannten Feder (21) mit seiner Spitze in Fahrtrichtung in nach vorne geschwenkter Ruhestellung gehalten. Der Schwenkwinkel betragt ca. 4° in Bezug zur Vertikalen.

Auf der Trägerplatte (8) ist ein dem Horizontal-Druckzylinder (6) zugeordnetes Steuerventil (22) angeordnet, dessen Ventilstößel (23) mit dem Pflanzspaten (11) gelenkig verbunden ist.

In der in den Fig. 1 und 2 gezeigten Ruhestellung des Pflanzschlittens (5) und des Pflanzspatens (11) ist das Steuerventil (22) derartig betätigt, daß der Horizontal-Druckzylinder (6) den Pflanzschlitten (5) in seiner vorderen Stellung hält. Ein in der Pflanzvorrichtung (1) am Tragrahmen (3) angeordnetes Entlastungsventil (24) wird in dieser Ruhestellung vom Pflanzschlitten (5) betätigt, so daß der Horizontal-Druckzylinder (6) entlastet ist.

Wie die Fig. 1 zeigt, hat die Pflanzvorrichtung (1) am Tragrahmen (3) eine nach hinten ragende Tragstrebe (25), an der weitere Bodenbearbeitungswerkzeuge (26, 27, 28) zum Andrücken der Pflanzen, zum Aufhäufen der Erde o.dgl. mehr angeordnet sind.

Weiterhin weist die Pflanzvorrichtung (1) eine Längenmeßvorrichtung (29) mit einem Meßdraht (30) auf, der über Sensoren (31) abgetastet wird. Die Sensoren (31) steuern das nicht dargestellte, dem Vertikal-Druckzylinder (9) zugeordnete Magnetventil.

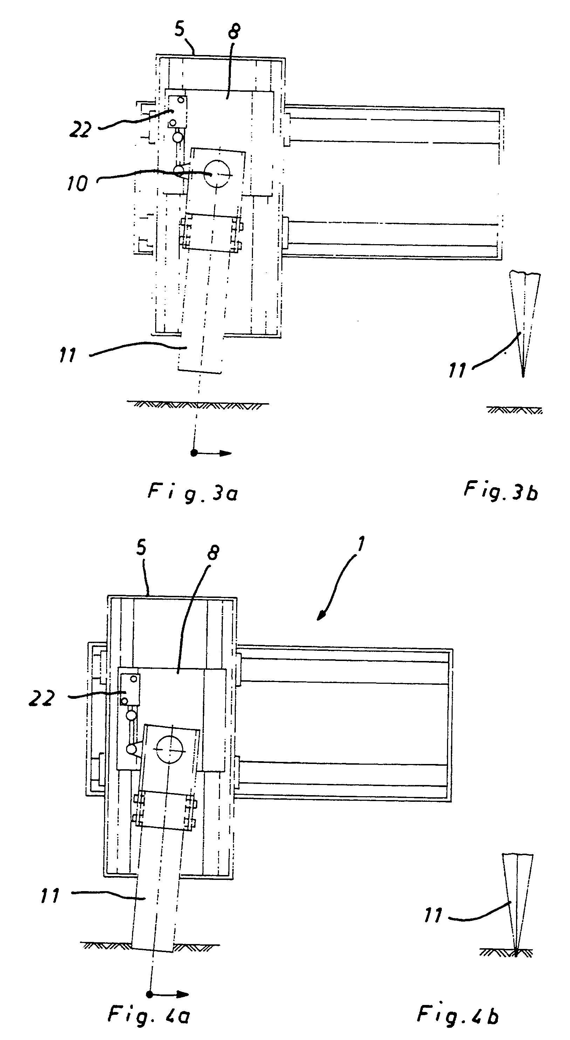

Bei Verwendung des erfindungsgemäßen Pflanzgerätes (1) wird das Ende des Meßdrahtes (30) am Anfang der zu setzenden Pflanzenreihe befestigt. Der Pflanzschlitten (5) und der Pflanzspaten befinden sich in der in Fig. 3a gezeichneten Ruhestellung, in der vom Bediener eine zu pflanzende Pflanze in den Pflanzspaten eingelegt wird. Nach Fig. 3b ist der Pflanzspaten (11) geschlossen.

Sobald die Sensoren (31) einen Auslöseimpuls liefern, wird der Vertikal-Druckzylinder (9) angesteuert, der die Trägerplatte (8) nach unten schiebt, bis die Pflanzschaufel (11) in das Erdreich eindringt, wie dies in den Fig. 4a und 4b gezeigt ist.

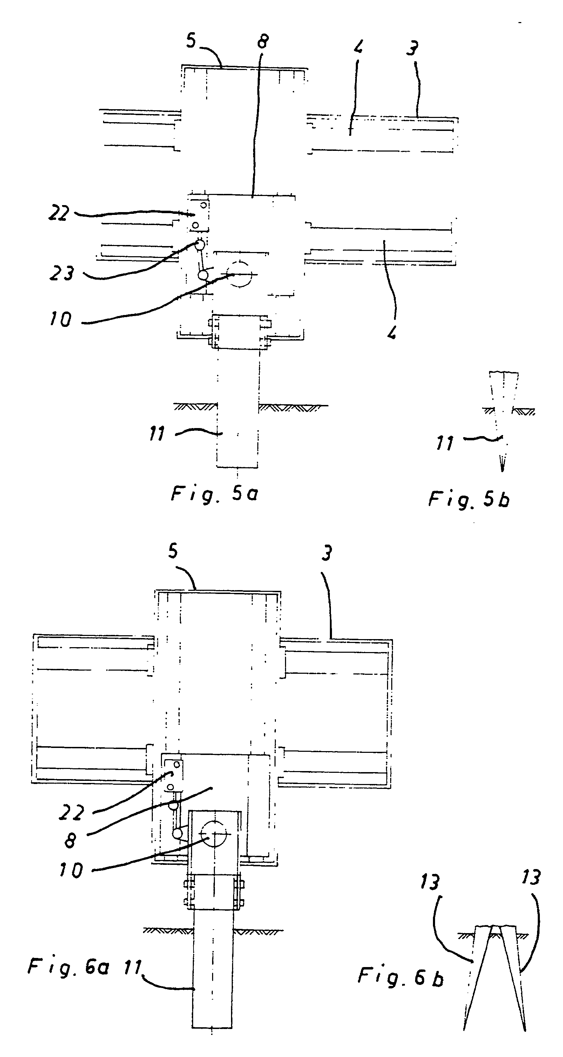

Durch das Eindringen der Pflanzschaufel (11) in das Erdreich wird die Pflanzschaufel (11) festgehalten, so daß sie um die Schwenkachse (10) nach hinten schwenkt, wie dies in Fig. 5a dargestellt ist. Dadurch wird der Ventilstößel (23) des Steuerventils (22) betätigt, so daß der Horizontal-Druckzylinder (6) angesteuert wird, der nunmehr den Schlitten (5) auf den Stäben (4) nach hinten schiebt, wie dies in Fig. 5a dargestellt ist. Das Steuerventil (22) bewirkt eine der Auslenkung des Pflanzspatens (11) proportionale Schubgeschwindigkeit, so daß der Spaten mit der Fahrgeschwindigkeit des Zugfahrzeuges nach hinten fährt und somit an der gleichen Bodenstelle stehen bleibt.

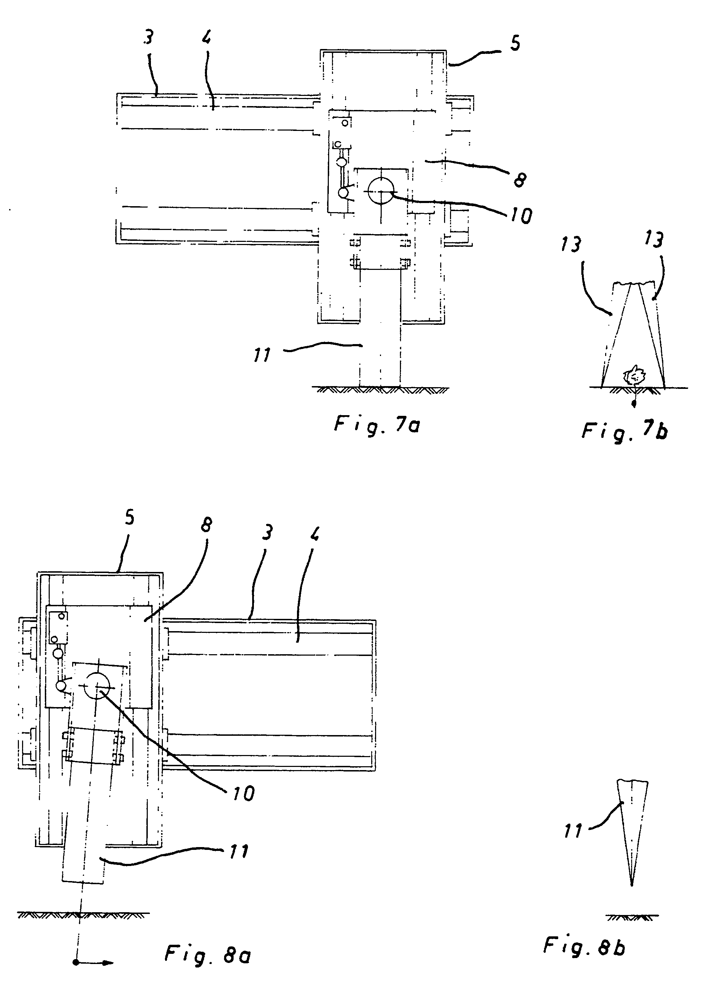

Hat die Trägerplatte und damit der Pflanzspaten (11) die tiefste Stellung erreicht, so wird über den Anschlag (20) das Magnetsteuerventil (19) des Druckzylinders (15) angesteuert, so daß sich der Pflanzspaten öffnet, wie dies in den Fig. 6a und 6b dargestellt ist. Gleichzeitig wird die Bewegungsrichtung des Vertikal-Druckzylinders (9) umgesteuert, so daß der Pflanzspaten (11) aus dem Erdboden herausgezogen wird und sich schließt, wie dies die Fig. 7a und 7b zeigen. Solange der Pflanzspaten (11) im Erdreich ist, bleibt der Horizontal-Druckzylinder (6) weiter angesteuert, so daß der Pflanzschlitten (5) weiter nach hinten fährt, wie dies in Fig. 7a gezeigt ist.

Kommt der Pflanzspaten (11) außer Kontakt mit dem Erdreich, wie dies in Fig. 8a dargestellt ist, so schwenkt der Pflanzspaten (11) um seine Schwenkachse (10) in die vordere Ruhestellung, so daß der Horizontal-Druckzylinder (6) umgesteuert wird, der nunmehr den Pflanzschlitten (5) in die vordere Ruhestellung bis zur Betätigung des Entlastungsventils (24) schiebt. Der Pflanzspaten (11) bleibt solange geöffnet, bis er den Bereich der gepflanzten Pflanze verlassen hat. Er schließt sich anschließend. Somit ist die Pflanzvorrichtung zum nächsten Pflanzvorgang bereit.

Dem Pflanzspaten (11) kann eine Bewässerungseinrichtung, Düngemittelabgabeeinrichtung o.dgl. zugeordnet werden, die in geöffnetem Zustand des Pflanzspatens gleichzeitig mit der Pflanze Wasser, Düngemittel und/oder dgl. ins Erdreich abgibt ¨

## Patentansprüche

1. An ein Landwirtschaftliches Zugfahrzeug o.dgl. anbaubare Pflanzvorrichtung (1), insbesondere zum Pflanzen von Reben, mit einem trichterartig hohlen, mit einer Öffnungseinrichtung versehenen Pflanzspaten (11), der in einem Pflanzschlitten (5) in vertikaler Richtung auf- und abschiebbar angeordnet ist, wobei der Pflanzschlitten (5) in der Pflanzvorrichtung (1) horizontal in Arbeitsrichtung durch einen hydraulisch steuerbaren Horizontal-Druckzylinder (6) hin- und herschiebbar gelagert ist, dadurch gekennzeichnet, daß der Pflanzspaten (11) im Pflanzschlitten (5) um eine quer zur Arbeitsrichtung und horizontal verlaufende Schwenkachse (10) schwenkbar angeordnet ist, daß der Pflanzspaten mit einer vorgespannten Feder (21) derart verbunden ist, daß der Pflanzspaten mit seiner Spitze in Arbeitsrichtung in nach vorne geschwenkter Ruhestellung gehalten ist, und daß im Pflanzschlitten ein dem Horizontal-Druckzylinder (6) zugeordnetes Steuerventil (22) angeordnet ist, dessen Ventilstößel (23) derart gelenkig mit dem Pflanzspaten verbunden ist, daß in Ruhestellung des Pflanzspatens der Pflanzschlitten (5) in Arbeitsrichtung nach vorne in seine Ruhestellung geschoben wird und dort gehalten ist und daß bei Auslenkung des Pflanzspatens entgegen der Wirkung der vorgespannten Feder der Pflanzschlitten nach hinten geschoben wird.

2. Pflanzvorrichtung nach Anspruch 1, dadurch gekennzeichnet, daß das Steuerventil (22) des Horizontal-Druckzylinders (6) derart ausgebildet ist, daß die Schubgeschwindigkeit des Pflanzschlittens (5) proportional der Auslenkung des Pflanzspatens (11) ist.

3. Pflanzvorrichtung nach Anspruch 1 oder 2, dadurch gekennzeichnet, daß ein Entlastungsventil (24) vorgesehen ist, das in Ruhestellung des Pflanzschlittens vom Pflanzschlitten betätigt ist.

4. Pflanzvorrichtung nach einem der Ansprüche 1 bis 3, dadurch gekennzeichnet, daß der Pflanzschlitten (5) auf zwei parallel und im Abstand zueinander angeordneten Stäben (4) hin- und herschiebbar angeordnet ist.

5. Pflanzvorrichtung nach einem der Ansprüche 1 bis 4, dadurch gekennzeichnet, daß der Pflanzspaten (11) auf einer Trägerplatte (8) angeordnet ist, die auf zwei im Abstand und parallel zueinander im Pflanzschlitten (5) angeordneten Säulen (7) auf- und abschiebbar gelagert ist.

6. Pflanzvorrichtung nach einem der Ansprüche 1 bis 5, dadurch gekennzeichnet, daß der Pflanzspaten (11) zwei Spatenabschnitte (13) hat, die jeweils an ihren oberen Enden um eine horizontale Drehachse (14) schwenkbar gelagert sind, wobei die beiden Drehachsen im Abstand und parallel zueinander verlaufen.

7. Pflanzvorrichtung nach Anspruch 6, dadurch gekennzeichnet, daß die Drehachsen (14) der Spatenabschnitte (13) in Arbeitsrichtung verlaufend angeordnet sind.

8. Pflanzvorrichtung nach Anspruch 6 oder 7, dadurch gekennzeichnet, daß die Pflanzspatenabschnitte (13) mit einer gemeinsamen, an der Tragerplatte (9) angeordneten Öffnungseinrichtung verbunden sind.

9. Pflanzvorrichtung nach einem der Ansprüche 1 bis 8, dadurch gekennzeichnet, daß die Öffnungseinrichtung einen hydraulisch steuerbaren Druckzylinder (15) aufweist, dessen Kolbenstange (16) über Gelenkhebel (17) mit den Pflanzspatenabschnitten (13) des Pflanzspatens (11) gelenkig verbunden sind.

10. Pflanzvorrichtung nach einem der Ansprüche 1 bis 9, dadurch gekennzeichnet, daß der Druckzylinder (15) der Öffnungseinrichtung derart mit einem Magnetsteuerventil (19) verbunden ist, daß der Pflanzspaten (11) in seiner tiefsten Stellung geöffnet ist und bis zur Rückkehr in die obere Ruhestellung geöffnet bleibt.

11. Pflanzvorrichtung nach einem der Ansprüche 1 bis 10, dadurch gekennzeichnet, daß an dem Pflanzschlitten (5) ein hydraulisch steuerbarer Vertikal-Druckzylinder (9) angeordnet ist, der an seinem einen Ende mit dem Pflanzschlitten (5) und über seine Kolbenstange mit der Trägerplatte (8) verbunden ist.

12. Pflanzvorrichtung nach Anspruch 11, dadurch gekennzeichnet, daß der Vertikal-Druckzylinder (9) derartig mit einem Magnetsteuerventil verbunden ist, daß nach einem Auslöseimpuls der Pflanzspaten (11) selbsttätig nach unten und wieder in seine obere Ruhestellung fährt.

13. Pflanzvorrichtung nach einem der Ansprüche 1 bis 12, dadurch gekennzeichnet, daß eine Längenmeßeinrichtung (29) zur Erzeugung der Auslöseimpulse vorgesehen ist.

14. Pflanzvorrichtung nach einem der Ansprüche 1 bis 13, dadurch gekennzeichnet, daß an der Pflanzvorrichtung (1) eine Tragstrebe (25) zum Anbau von Bodenbearbeitungswerkzeugen (26, 27, 28) vorgesehen ist.

15. Pflanzvorrichtung nach einem der Ansprüche 1 bis 14, dadurch gekennzeichnet, daß dem Pflanzspaten (11) eine Bewässerungseinrichtung, Düngemittelabgabeeinrichtung o.dgl. zugeordnet ist.

## Claims

1. Planting device (1) for attachment to an agricultural tractor or the like, in particular for planting of grapevines, comprising a hollow funnel-like planter spade (11) having opening means and which is arranged to be movable up and down in the vertical direction in a plant slide, in which respect the plant slide (5) is mounted in the planting device (1) so as to be movable horizontally to and fro in the operating direction by way of a hydraulically controlled horizontal pressure cylinder (6), characterised in that the planter spade (11) in the plant slide (5) is arranged to be pivotable around a pivot axis (10) which extends horizontally and transversely to the operating direction, in that the planter spade is connected to a pre-tensioned spring (21) in such a manner that the planter spade is held with its tip as seen in the operating direction, in the forward pivoted inoperative position, in that the plant slide houses a control valve (22) which is associated with the horizontal pressure cylinder (6) and the valve tappet (23) of which is hingedly connected to the planter spade in such a manner that, when the planter spade is in its inoperative position, the plant slide (5) as seen in the operating direction, is pushed forward into its inoperative position and held there, and in that the plant slide is pushed backwards against the force of the pre-tensioned spring when the planter spade is deflected.

2. Planting device according to claim 1, characterised in that the control valve (22) of the horizontal pressure cylinder (6) is arranged so that the thrust speed of the plant slide (5) is proportional to the deflection of the planter spade (11).

3. Planting device according to claim 1 or 2, characterised in that a relief valve (24) is provided which, with the plant slide in its inoperative position, is operated by the plant slide.

4. Planting device according to one of claims 1 to 3, characterised in that the plant slide (5) is arranged to be movable to and fro on two rods (4) arranged parallel with, and at a distance to one another.

5. Planting device according to one of claims 1 to 4, characterised in that the planter spade (11) is arranged on a support plate (8) which is mounted to be movable up and down on two columns (7), which are arranged in the plant slide (5) and at a distance from and parallel to one another.

6. Planting device according to one of claims 1 to 5, characterised in that the planter spade (11) comprises two spade sections (13) which are each mounted at their upper ends so as to be pivotable around a horizontal axis of rotation (14), whereby the two axes of rotation extend at a distance from, and parallel to one another.

7. Planting device according to claim 6, characterised in that the axes of rotation (14) of the spade sections (13) are arranged to extend in the operating direction.

8. Planting device according to claim 6 or 7, characterised in that the planter spade sections (13) are connected to a shared opening means at the support plate (9).

9. Planting device according to one of claims 1 to 8, characterised in that the opening means comprises a hydraulically operated pressure cylinder (15), the piston rod (16) of which is hingedly connected via hinged lever (17) to the planter spade sections (13) of the planter spade (11).

10. Planting device according to one of claims 1 to 9, characterised in that the pressure cylinder (15) of the opening means is connected to a solenoid control valve (19) in such a manner that the planter spade (11) is opened in its deepest position and remains open until returning into the upper, inoperative position.

11. Planting device according to one of claims 1 to 10, characterised in that a hydraulically controlled vertical pressure cylinder (9) is arranged at the plant slide (5), which cylinder is connected at one end to the plant slide (5), and via its piston rod to the support plate (8).

12. Planting device according to claim 11, characterised in that the vertical-pressure cylinder (9) is connected to a solenoid control valve in such a manner that, following a triggering pulse, the planter spade (11) automatically moves downwards and back again into its upper inoperative position.

13. Planting device according to one of claims 1 to 12, characterised in that a length-measuring device (29) is provided for initiating the triggering pulses.

14. Planting device according to one of claims 1 to 13, characterised in that a support frame (25) is provided at the planting device (1) for attachment to ground-cultivating equipment (26, 27, 28).

15. Planting device according to one of claims 1 to 14, characterised in that the planter spade (11) is associated with a watering means, a fertiliser dispensing means or the like.

## Revendications

1. Planteuse-repiqueuse (1) attelée à un tracteur agricole ou à un engin analogue, destinée en particulier à planter des ceps de vigne, comportant un plantoir creux (11) en forme de trémie, muni d'un dispositif d'ouverture et disposé de manière à coulisser verticalement vers le haut et vers le bas dans un chariot (5), ledit chariot (5) étant monté dans la planteuse-repiqueuse de manière à coulisser horizontalement en un mouvement de va-et-vient dans la direction du labourage sous l'effet d'un vérin horizontal (6) commandé hydrauliquement, caractérisée en ce que le plantoir (11) est disposé dans le chariot (5) de manière à pivoter autour d'un axe (10) s'étendant horizontalement et transversalement par rapport à la direction du labourage, en ce que ledit plantoir est relié à un ressort (21) sous tension, de telle sorte qu'il se trouve maintenu dans une position de repos basculée vers l'avant, sa pointe étant orientée dans la direction du labourage, en ce que dans le chariot est disposée, associée au vérin horizontal (6), une vanne-pilote (22) dont le poussoir (23) est articulé sur le plantoir de telle sorte que, dans la position de repos dudit plantoir, le chariot (5) est poussé vers l'avant en direction du labourage et s'y trouve maintenu, et en ce que, lorsque le plantoir (11) est dirigé dans le sens contraire à l'effet exercé par le ressort sous tension, le chariot (5) est poussé vers l'arrière.

2. Planteuse-repiqueuse selon la revendication 1, caractérisée en ce que la vanne-pilote (22) du vérin horizontal (6) est réalisée de telle sorte que la vitesse de poussée du chariot (5) est proportionnelle au déplacement du plantoir (11).

3. Planteuse-repiqueuse selon les revendications 1 ou 2, caractérisée en ce qu'une soupape de détente (24) est prévue qui, en position de repos du chariot, est commandée par celui-ci.

4. Planteuse-repiqueuse selon l'une quelconque des revendications 1 à 3, caractérisée en ce que le chariot (5) est disposé de manière à coulisser en un mouvement de va-et-vient sur deux barres (4) disposées parallèlement à une certaine distance l'une de l'autre.

5. Planteuse-repiqueuse selon l'une quelconque des revendications 1 à 4, caractérisée en ce que le plantoir (11) est disposé sur une plaque support (8) qui est montée de manière à se déplacer vers le haut et vers le bas sur deux colonnes (7) disposées parallèlement et à une certaine distance l'une de l'autre dans le chariot (5).

6. Planteuse-repiqueuse selon l'une quelconque des revendications 1 à 5, caractérisée en ce que le plantoir (11) comporte deux sections (13) dont chacune est montée sur son extrémité supérieure de manière à pivoter autour d'un axe de rotation horizontal (14), les deux axes de rotation étant parallèles et s'étendant à une certaine distance l'un de l'autre.

7. Planteuse-repiqueuse selon la revendication 6, caractérisée en ce que les axes de rotation (14) des sections (13) du plantoir sont disposés de manière à s'étendre dans la direction du labourage.

8. Planteuse-repiqueuse selon les revendications 6 ou 7, caractérisé en ce que les sections (13) du plantoir sont reliées par un dispositif d'ouverture commun disposé sur la plaque support (9).

9. Planteuse-repiqueuse selon l'une quelconque des revendications 1 à 8, caractérisée en ce que le dispositif d'ouverture présente un vérin (15) à commande hydraulique dont la tige de piston (16) est reliée par des leviers articulés (17) aux sections (13) du plantoir (11).

10. Planteuse-repiqueuse selon l'une quelconque des revendications 1 à 9, caractérisée en ce que le vérin (15) du dispositif d'ouverture est relié à une vanne magnétique (19) de telle sorte que le plantoir (11) est ouvert dans sa position la plus profonde et reste ouvert jusqu'à son retour dans la position de repos supérieure.

11. Planteuse-repiqueuse selon l'une quelconque des revendications 1 à 10, caractérisée en ce que sur le chariot (5) est disposé un vérin vertical (9) à commande hydraulique qui est relié par l'une de ses extrémités au chariot (5) et par sa tige de piston à la plaque support (8).

12. Planteuse-repiqueuse selon la revendication 11, caractérisée en ce que le vérin vertical (9) est relié à une vanne magnétique de telle sorte qu'après une impulsion de déclenchement, le plantoir (11) se déplace automatiquement vers le bas et retourne dans sa position de repos supérieure.

13. Planteuse-repiqueuse selon l'une quelconque des revendications 1 à 12, caractérisée par la présence d'un dispositif (29) de mesure des longueurs destiné à produire les impulsions de déclenchement.

14. Planteuse-repiqueuse selon l'une quelconque des revendications 1 à 13, caractérisée par la présence sur ladite planteuse-repiqueuse (1) d'une entretoise support (25) pour le montage d'outils (26, 27, 28) pour le labourage du sol.

15. Planteuse-repiqueuse selon l'une quelconque des revendications 1 à 14, carcatérisée en ce qu'au plantoir (11) est associé un dispositif d'arrosage, un dispositif d'épandage d'engrais ou un dispositif analogue.

Fig. 1

Fig. 2

EP 0 334 174 B1

5    8

22

10

11

Fig.3a

11

Fig.3b

5    8                                    1

22

11

Fig.4a

11

Fig.4b

Fig. 5a

Fig. 5b

Fig. 6a

Fig. 6b

3    4                                          5

8

10

11

13        13

Fig. 7a                          Fig. 7b

5    8    3    4

10

11                                        11

Fig. 8a                          Fig. 8b